# EUROPEAN PATENT APPLICATION

(11) **EP 4 243 383 A1**
(43) Date of publication of application: **13.09.2023**
(21) Application number: 21908841.6
(22) Date of filing: 27.10.2021
(51) Int. Cl.: H04L 69/322

(54) **MESSAGE TRANSMISSION METHOD AND SYSTEM, AND NETWORK DEVICE AND STORAGE MEDIUM**

(30) Priority: 23.12.2020 CN 202011538853
(71) Applicant: ZTE Corporation, Shenzhen, Guangdong 518057 (CN)
(72) Inventor: GAO, Fei, Shenzhen, Guangdong 518057 (CN); CHE, Zhonghui, Shenzhen, Guangdong 518057 (CN); MA, Xiaoliang, Shenzhen, Guangdong 518057 (CN)
(74) Representative: Savi, Massimiliano
(86) International application number: PCT/CN2021/126781
(87) International publication number: WO 2022/134840

(57) **Abstract**

The embodiments of the present application relate to the technical field of communications. Provided are a message transmission method and system, and a network device and an electronic medium. The message transmission method comprises: receiving a layer-2 message sent by a first user equipment; acquiring a forwarding port number and an added message header, and determining a message encapsulation manner; encapsulating the layer-2 message according to the message encapsulation manner, the forwarding port number and the added message header, and acquiring a layer-3 message; and sending the layer-3 message to a second forwarding device.

## Description

### CROSS-REFERENCE TO RELATED APPLICATION

This application is filed on the basis of Chinese patent application No. 202011538853.2 filed December 23, 2020, and claims priority to the Chinese patent application, the entire contents of which are incorporated herein by reference.

### TECHNICAL FIELD

Embodiments of the present disclosure relate to the field of communication technology, and particularly to a message transmission method and system, a network device, and a storage medium.

### BACKGROUND

Data products usually forward Layer 3 messages to meet the communication requirements of users. However, in some special scenarios, such as power industry, large aircraft, and other industrial scenarios, Layer 2 devices are used for performing wired communications as follows, i.e., a sender encapsulates data and a Medium Access Control (MAC) address in a message to form a Layer 2 message, and then transmits the Layer 2 message to a recipient through an optical fiber for use by the recipient.

However, in the era of 5th-Generation Mobile Communication Technology (5G), there are more and more application scenarios of industrial devices, and the communication between devices is becoming more and more frequent. Wired communication through optical fibers cannot meet the communication requirements between Layer 2 devices in all industrial scenarios, and existing Layer 2 devices can only send and receive Layer 2 messages, but cannot support Layer 3 messages used in wireless communication. If the existing industrial devices are modified or replaced to achieve support for Layer 3 messages and thus wireless communication, it will be complicated and difficult to implement due to the large number of industrial devices involved, and the replacement of industrial devices will lead to a waste of resources.

### SUMMARY

An embodiment of the present disclosure provides a message transmission method. The method includes: receiving a Layer 2 message sent by a first user equipment; acquiring a forwarding port number and an added message header, and determining a message encapsulation mode; encapsulating the Layer 2 message based on the message encapsulation mode, the forwarding port number, and the added message header to obtain a Layer 3 message; and sending the Layer 3 message to a second forwarding device.

An embodiment of the present disclosure further provides a message transmission method. The method includes: receiving a message sent by a first forwarding device; detecting whether the message is a Layer 3 message which is a message carrying an added message header and a forwarding port number; in response to the message being a Layer 3 message, detecting whether the added message header and the forwarding port number are a message header and a port number pre-agreed with the first forwarding device; and in response to the added message header and the forwarding port number being a message header and a port number pre-agreed with the first forwarding device, extracting a data part encapsulated in the message and sending the data part to a second user equipment, where the data part is a Layer 2 message sent by the first user equipment.

An embodiment of the present disclosure further provides a message transmission system. The system includes: a first user equipment, configured to send a Layer 2 message to a first forwarding device; the first forwarding device, configured to receive the Layer 2 message sent by the first user equipment, determine a forwarding port number, a message encapsulation mode and an added message header, encapsulate the Layer 2 message based on the message encapsulation mode, the forwarding port number and the added message header to obtain a Layer 3 message, and send the Layer 3 message to a second forwarding device; a second forwarding device, configured to receive a message sent by the first forwarding device, detect whether the message is a Layer 3 message, detect whether the message satisfies a correct sending condition in response to the message being a Layer 3 message, where the correct sending condition is that the message carries an added message header and a forwarding port number which are pre-agreed with the first forwarding device, and in response to the message satisfying the correct sending condition, extract a Layer 2 message encapsulated in the message and send the Layer 2 message to a second user equipment, where the Layer 2 message is a message sent by the first user equipment; and the second user equipment, configured to receive a message sent by the second forwarding device.

An embodiment of the present disclosure further provides a network device. The device includes: at least one processor; and a memory communicably connected to the at least one processor. The memory stores an instruction executable by the at least one processor which, when executed by the at least one processor, cause the at least one processor to implement the above message transmission method.

An embodiment of the present disclosure further provides a computer-readable storage medium, storing a computer program which, when executed by a processor, causes the processor to implement the above message transmission method.

### BRIEF DESCRIPTION OF DRAWINGS

FIG. 1 is a flowchart one of a message transmission method according to a first embodiment of the present disclosure;
FIG. 2 is a flowchart of a step of S102 in the message transmission method according to the first embodiment of the present disclosure shown in FIG. 1;
FIG. 3 is a flowchart two of the message transmission method according to the first embodiment of the present disclosure.
FIG. 4 is a flowchart of a message transmission method according to a second embodiment of the present disclosure;
FIG. 5 is a flowchart of a message transmission method according to a third embodiment of the present disclosure;
FIG. 6 shows an application scenario involved in the message transmission method according to the third embodiment of the present disclosure shown in FIG. 5;
FIG. 7 is a schematic structural diagram of a message transmission system according to a fourth embodiment of the present disclosure; and
FIG. 8 is a schematic structural diagram of a network device according to a fifth embodiment of the present disclosure.

### DETAILED DESCRIPTION

A main object of embodiments of the present disclosure is to provide a message transmission method and system, a network device, and a storage medium, to realize wireless communication between Layer 2 devices without reconstructing or replacing existing Layer 2 devices.

Objects, technical schemes and advantages of the embodiments of the present disclosure will be clear from a detailed description of the embodiments of the present disclosure in conjunction with the drawings. However, it may be understood by those having ordinary skills in the art that although various embodiments of the present disclosure provide many technical details to make the readers better understand the present disclosure, the technical schemes claimed in the present disclosure can be realized without these technical details and various variations and modifications made based on the following embodiments. The following embodiments are divided for convenience of description and are not intended to constitute any limitation on the specific implementations of the present disclosure. The embodiments may be combined with each other if not in collision.

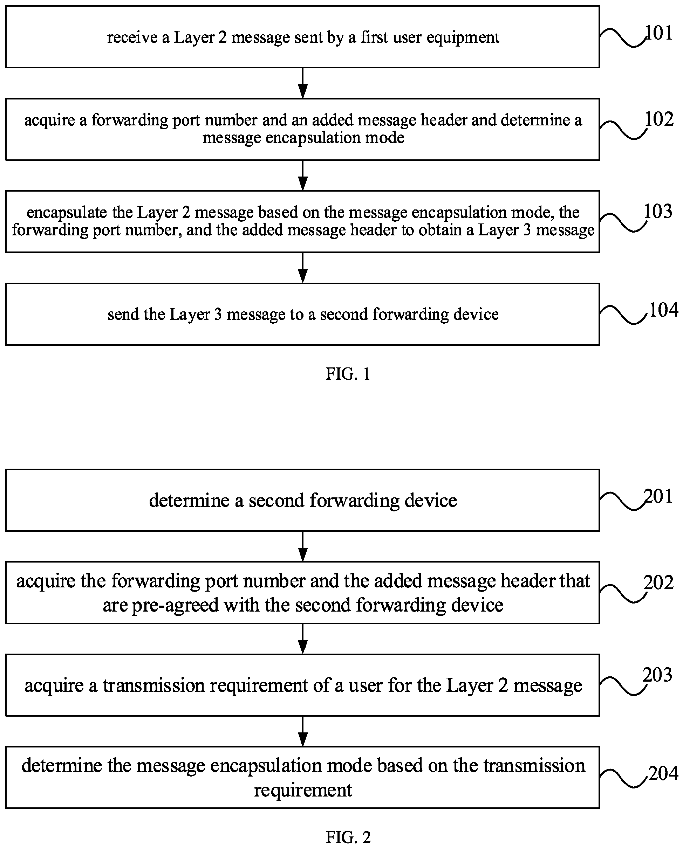

A first embodiment of the present disclosure relates to a message transmission method applied to a first forwarding device. As shown in FIG. 1, the method includes the following steps.

At a step of S101, a Layer 2 message sent by a first user equipment is received.

In an embodiment, the Layer 2 message from the first user equipment on a user side is received. The first user equipment is a Layer 2 device, and the Layer 2 message is transmitted based on a MAC address.

At a step of S 102, a forwarding port number and an added message header are acquired and a message encapsulation mode is determined.

In an embodiment, as shown in FIG. 2, the step of S102 includes the following steps.

At a step of S201, a second forwarding device is determined.

At a step of S202, the forwarding port number and the added message header which are pre-agreed with the second forwarding device are acquired.

The content of the added message header is not limited in this embodiment. In an actual implementation process, the added message header agreed on by the first forwarding device and the second forwarding device may be any type of field.

At a step of S203, a transmission requirement of a user for the Layer 2 message is acquired.

In an embodiment, the transmission requirement of the user for the Layer 2 message may involves reliability, real-timeliness, etc. The acquired transmission requirement for the Layer 2 message may be manually set by the user or may be a pre-stored agreed transmission requirement. The manner of acquiring the transmission requirement is not limited, as long as current actual requirements of two communication parties can be accurately acquired.

At a step of S204, the message encapsulation mode is determined based on the transmission requirement.

In an embodiment, the message encapsulation mode includes a Transmission Control Protocol (TCP) encapsulation and a User Datagram Protocol (UDP) encapsulation. When it is required to ensure the reliability of message transmission and no packet loss, the message encapsulation mode is TCP encapsulation; while when it is required to ensure real-time message transmission and has a low requirement on reliability, the message encapsulation mode is UDP encapsulation.

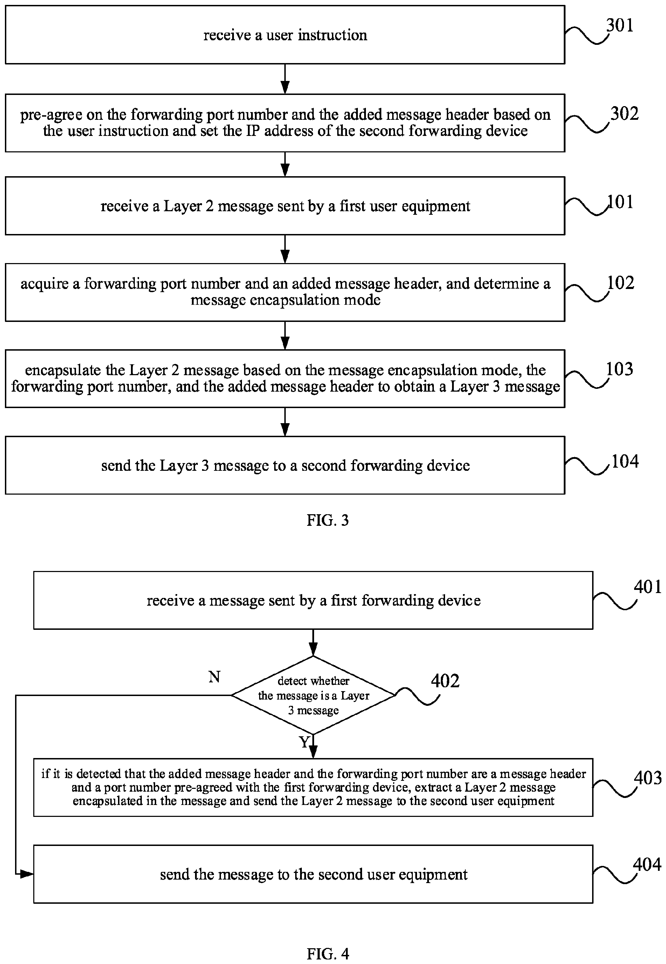

It should be noted that in this embodiment, the forwarding port number, the added message header, and an IP address of the second forwarding device may be pre-stored or acquired from a peripheral terminal. If the forwarding port number, the added message header, and the IP address of the second forwarding device are pre-stored, the forwarding port number, the added message header, and the IP address of the second forwarding device may be manually input by the user and stored. If the forwarding port number, the added message header, and the IP address of the second forwarding device are acquired from the peripheral terminal, as shown in FIG. 3, the method further includes following steps prior to S101.

At a step of S301, a user instruction is received.

In an embodiment, an open page is provided to the user, so that the user operates to set relevant data. The page is configured to generate a corresponding user instruction and sends out the user instruction.

At a step of S302, the forwarding port number and the added message header are pre-agreed on based on the user instruction, and the IP address of the second forwarding device is set.

In an embodiment, an agreement made based on the user instruction may involve only the current two communication parties, or all forwarding devices. In practical applications, any one, two, or three of pre-agreeing on the forwarding port number, pre-agreeing on the added message header, and setting the IP address of the second forwarding device are performed based on the user instruction.

At a step of S103, the Layer 2 message is encapsulated based on the message encapsulation mode, the forwarding port number, and the added message header to obtain a Layer 3 message.

In an embodiment, based on the message encapsulation mode, it is determined whether to generate a UDP header or a TCP header carrying a forwarding port number as a protocol message header. Meanwhile, an IP header also has to be acquired. Then the Layer 2 message is encapsulated based on the obtained protocol message header, the IP header, and the added message header to obtain the Layer 3 message for wireless communication.

It should be noted that a source IP address in the IP header is an IP address assigned after data dialing, and a destination IP address in the IP header is an IP address of the second forwarding device receiving the Layer 3 message. Both the UDP header and the TCP header carry the forwarding port number determined at the step of S102 and several fields as a depacketizing flag.

At a step of S104, the Layer 3 message is sent to the second forwarding device.

In an embodiment, the second forwarding device may include one device, or a plurality of devices.

It should be noted that the terms "first" and "second" in the first and second forwarding devices referred to in the present disclosure mean that the two devices are not the same device. Functions of the first forwarding device and the second forwarding device may be configured in the same device, and the first forwarding device and the second forwarding device provide different functions in different communication processes depending on the source of the received message. For example, in a communication process, a forwarding device is configured to receive a message from a user equipment and provide the function of the first forwarding device described above. That is, the forwarding device is defined as the first forwarding device in this communication process. In another communication process, this forwarding device is configured to receive a message from another forwarding device and provide the function of the second forwarding device described above, and therefore is defined as the second forwarding device in this communication process.

As compared with existing technology, in this embodiment, after receiving the Layer 2 message sent by the first user equipment, the first forwarding device is configured to acquire the forwarding port number and the added message header, and determine the message encapsulation mode. Then, the first forwarding device is configured to encapsulate the Layer 2 message based on the message encapsulation mode, the forwarding port number, and the added message header to obtain the Layer 3 message for wireless communication. After that, the first forwarding device is configured to send the Layer 3 message to the second forwarding device through wireless communication, so that upon receiving the Layer 3 message, the second forwarding device can directly extract the Layer 2 message sent by the first user equipment and encapsulated in the Layer 3 message, and is configured to directly send the Layer 2 message to the second user equipment. As such, wireless communication is completed between the first user equipment and the second user equipment. Because the first forwarding device is configured to encapsulate the Layer 2 message to obtain the Layer 3 message that can be used for wireless communication, and the second forwarding device is configured to directly extract the Layer 2 message sent by the first user equipment and encapsulated in the Layer 3 message, the Layer 3 message can be restored to the Layer 2 message that can be received by the second user equipment, thereby realizing wireless communication between existing pieces of user equipment without reconstructing or replacing the pieces of user equipment.

A second embodiment of the present disclosure relates to a message transmission method, which is applied to a second forwarding device. As shown in FIG. 4, the method includes following steps.

At a step of S401, a message sent by a first forwarding device is received.

In an embodiment, the message sent by the first forwarding device on a network side is received.

At a step of S402, it is detected whether the message is a Layer 3 message. If so, a step of S403 is performed; rather, a step of S404 is performed.

In an embodiment, it is detected whether the message carries an added message header and a forwarding port number. If so, the message is a Layer 3 message; rather, the message is a Layer 2 message.

At a step of S403, if it is detected that the added message header and the forwarding port number are a message header and a port number pre-agreed with the first forwarding device, the Layer 2 message encapsulated in the message is extracted and sent to the second user equipment.

In an embodiment, during encapsulation performed by the first forwarding device, the Layer 2 device received by the first forwarding device is used as a data part of the Layer 3 message. Upon receiving the Layer 3 message, the second forwarding device is configured to first detect whether the Layer 3 message is correctly received by detecting whether the added message header and the forwarding port number are the message header and the port number pre-agreed with the first forwarding device, and then extract the data part only if the Layer 3 message is correctly sent.

At a step of S404, the message is sent to the second user equipment.

In an embodiment, the second user equipment is a Layer 2 device, which supports receiving of Layer 2 messages and is located on a Virtual Local Area Network (VLAN) side.

As compared with existing technology, in this embodiment, both the Layer 3 message and the Layer 2 message can be received. After the Layer 3 message is correctly received, the Layer 2 message encapsulated in the Layer 3 message can be extracted, and then all Layer 2 messages acquired are sent to the second user equipment. As such, wireless communication is completed between the first user equipment and the second user equipment. Because both the Layer 2 message and the Layer 3 message can be processed, the number of types of messages that can be processed by the second forwarding device is increased, thereby improving the applicability of the technical schemes provided in the embodiments of the present disclosure.

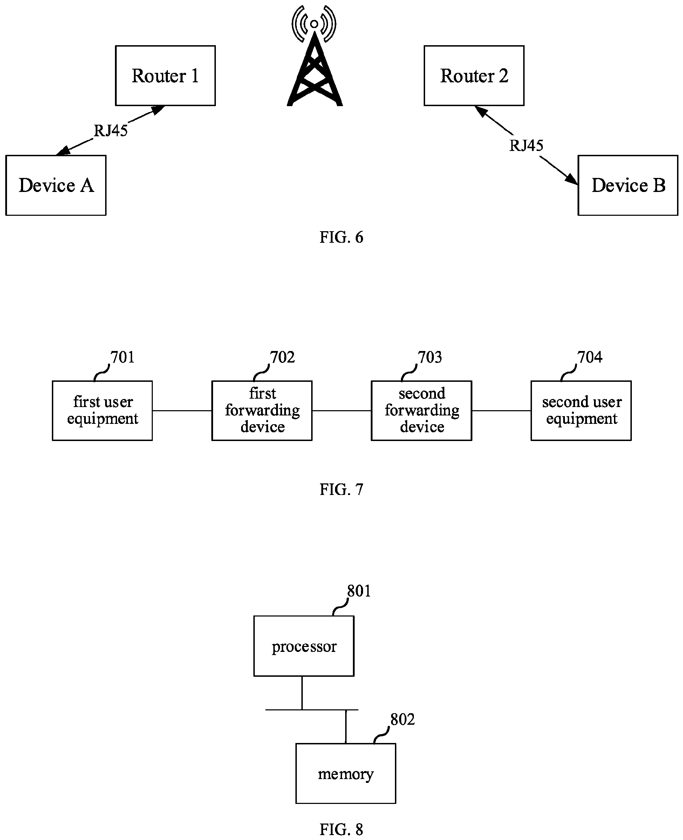

In order to enable those having ordinary skills in the art to clearly understand the overall process of the message transmission method disclosed in the first embodiment and the second embodiment of the present disclosure, a third embodiment of the present disclosure is described below. In this example, the forwarding devices are routers (a router 1 and a router 2), a sender of the Layer 2 message is a device A, a recipient of the Layer 2 message is a device B, and the encapsulation mode is UDP encapsulation. The message transmission method is applied in a scenario shown in FIG. 6, where the device A is connected to the router 1 through a network cable, the router 1 is configured to perform a 5G/Long Term Evolution (LTE) dialing, while the router 2 at a peer end is also configured to perform a 5G/LTE dialing. The device B is connected to the router 2.

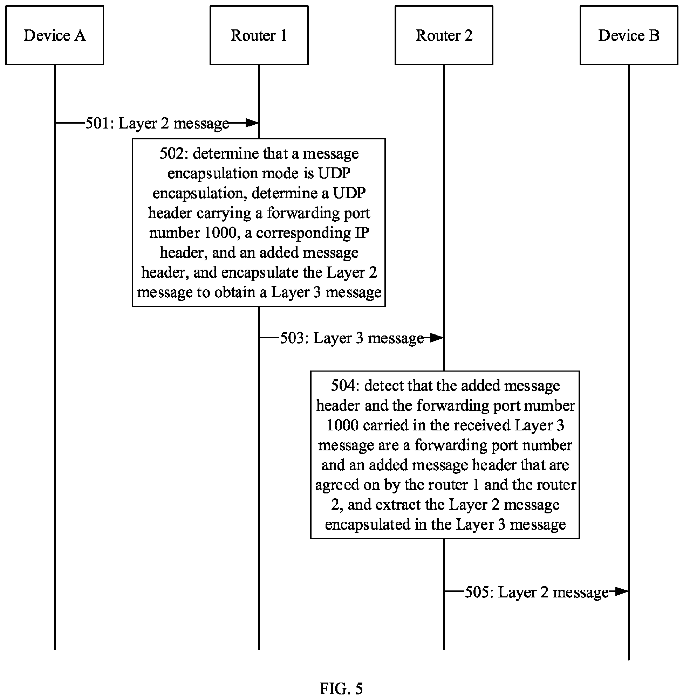

As shown in FIG. 5, the third embodiment of the present disclosure provides a message transmission method, including the following steps.

At a step of S601, a device A is configured to send a Layer 2 message to a router 1.

At a step of S602, the router 1 determines that UDP encapsulation is adopted as a message encapsulation mode, determines a UDP header carrying a forwarding port number 1000, a corresponding IP header, and an added message header, and encapsulates the Layer 2 message to obtain a Layer 3 message.

At a step of S603, the router 1 is configured to send the Layer 3 message to a router 2.

At a step of S604, the router 2 detects that the added message header and the forwarding port number 1000 carried in the received Layer 3 message are a forwarding port number and an added message header that are agreed on by the router 1 and the router 2, and is configured to extract the Layer 2 message encapsulated in the Layer 3 message.

At a step of S605, the router 2 is configured to send the Layer 2 message to a device B.

AS compared with existing technology, in this embodiment, after receiving the Layer 2 message sent by the first user equipment, the first forwarding device is configured to acquire the forwarding port number and the added message header, and determine the message encapsulation mode. Then, the first forwarding device is configured to encapsulate the Layer 2 message based on the message encapsulation mode, the forwarding port number, and the added message header to obtain the Layer 3 message for wireless communication. After that, the first forwarding device is configured to send the Layer 3 message to the second forwarding device by wireless communication. Thus, upon receiving the Layer 3 message, the second forwarding device can directly extract the Layer 2 message sent by the first user equipment and encapsulated in the Layer 3 message, and directly send the Layer 2 message to the second user equipment. As such, wireless communication is completed between the first user equipment and the second user equipment. Because the first forwarding device is configured to encapsulate the Layer 2 message to obtain the Layer 3 message for wireless communication, and the second forwarding device is configured to directly extract the Layer 2 message sent by the first user equipment and encapsulated in the Layer 3 message, the Layer 3 message can be restored to the Layer 2 message that can be received by the second user equipment, thereby realizing wireless communication between existing pieces of user equipment without reconstructing or replacing the pieces of user equipment.

In addition, it should be understood that the division of the steps of the above methods is only for the sake of clear description. However, in practical applications, the steps may be combined into one step, or some steps may be divided into multiple steps. Such combination or division falls within the scope of protection of the present disclosure as long as the identical logical relationship is included. Any insignificant modification made to or any insignificant design introduced in an algorithm or process without changing the core design of the algorithm and process shall fall within the scope of protection of the present disclosure.

A fourth embodiment of that application relates to a message transmission system. As shown in FIG. 7, the system includes following devices.

A first user equipment 701 is configured to send a Layer 2 message to a first forwarding device.

The first forwarding device 702 is configured to receive the Layer 2 message sent by the first user equipment, determine a forwarding port number, a message encapsulation mode, and an added message header, encapsulate the Layer 2 message based on the message encapsulation mode, the forwarding port number, and the added message header to obtain a Layer 3 message, and send the Layer 3 message to a second forwarding device.

The second forwarding device 703 is configured to receive a message sent by the first forwarding device, detect whether the message is a Layer 3 message, if the message is a Layer 3 message, detect whether the message satisfies a correct sending condition that the message carries an added message header and a forwarding port number that are pre-agreed with the first forwarding device, and if the message satisfies the correct sending condition, extract a Layer 2 message encapsulated in the message and send the Layer 2 message to a second user equipment, where the Layer 2 message is a message sent by a first user equipment.

The second user equipment 704 is configured to receive a message sent by the second forwarding device.

It can be seen that, this embodiment is a system embodiment corresponding to the first to third embodiments, so this embodiment may be implemented in combination with the first to third embodiments. The related technical details mentioned in the first to third embodiments are still valid in this embodiment, and the details will not be repeated here to reduce repetition. Accordingly, the related technical details mentioned in this embodiment also apply to the first to third embodiments.

It is to be noted that each module involved in this embodiment is a logic module. In practical applications, a logic unit may be a physical unit or a part of a physical unit, or may be implemented by a combination of a plurality of physical units. In addition, in order to highlight the innovative part of the present disclosure, units that are not closely related to the technical problem to be solved in the present disclosure are not introduced in this embodiment, but this does not mean that there are no other units in this embodiment.

A fifth embodiment of the present disclosure relates to a network device. As shown in FIG. 8, the network device includes: at least one processor 801, and a memory 802 communicably connected to the at least one processor 801. The memory 802 is configured to store an instruction executable by the at least one processor 801 which, when executed by the at least one processor 801, causes the at least one processor 801 to implement the message transmission method according to any one of the foregoing method embodiments.

The memory 802 and the processor 801 are connected by a bus, which may include any number of interconnected buses and bridges, and connect various circuits of one or more processors 801 and the memory 802 together. The bus may also connect a peripheral device, a voltage regulator, a power management circuit, and other circuits, which are well known in the art and therefore will not be detailed herein. A bus interface provides an interface between the bus and a transceiver. The transceiver may be one or more elements, for example, a plurality of receivers and transmitters, and provides a unit for communicating with various other apparatus over a transmission medium. Data processed by the processor 801 is transmitted over a wireless medium through an antenna. The antenna further receives data and transmits the data to the processor 801.

The processor 801 is responsible for managing the bus and general processing, and may also provide various functions including timing, peripheral interfaces, voltage regulation, power management and other control functions. The memory 802 may be configured to store data used by the processor 801 in performing operations.

A sixth embodiment of the present disclosure relates to a computer-readable storage medium, storing a computer program which, when executed by a processor, causes the processor to implement the foregoing method embodiments.

It may be understood by those having ordinary skills in the art that all or some of the steps of the methods in the above embodiments may be performed by a program instructing related hardware. The program is stored in a storage medium, and includes several instructions to cause a device (which may be a single chip microcomputer, a chip, etc.) or a processor to implement all or some of the steps of the methods described in the embodiments of the present disclosure. The foregoing storage medium includes any medium that can store program codes, such as USB flash drive, removable hard disk, Read-Only Memory (ROM), Random Access Memory (RAM), magnetic disk, or optical disk.

It may be understood by those having ordinary skills in the art that the foregoing embodiments are embodiments for practicing the present disclosure, and that in practical applications, various changes in form and details may be made without departing from the scope of the present disclosure.

## Claims

1. A message transmission method, comprising:
receiving a Layer 2 message sent by a first user equipment;
acquiring a forwarding port number and an added message header, and determining a message encapsulation mode;
encapsulating the Layer 2 message based on the message encapsulation mode, the forwarding port number, and the added message header to obtain a Layer 3 message; and
sending the Layer 3 message to a second forwarding device.

2. The method of claim 1, wherein acquiring a forwarding port number and an added message header, and determining a message encapsulation mode comprises:
determining the second forwarding device;
acquiring the forwarding port number and the added message header that are pre-agreed with the second forwarding device;
acquiring a transmission requirement of a user for the Layer 2 message; and
determining the message encapsulation mode based on the transmission requirement.

3. The method of claim 1 or 2, wherein encapsulating the Layer 2 message based on the message encapsulation mode, the forwarding port number, and the added message header to obtain a Layer 3 message comprises:
performing a data dialing and determining an Internet Protocol, IP, address assigned after the dialing as a source IP address;
determining an IP address preset by the second forwarding device as a destination IP address;
acquiring an IP header based on the source IP address and the destination IP address;
acquiring a protocol message header based on the message encapsulation mode and the forwarding port number; and
encapsulating the IP header, the protocol message header, the added message header, and the Layer 2 message to obtain the Layer 3 message.

4. The method of any one of claims 1 to 3, wherein the message encapsulation mode is a Transmission Control Protocol, TCP, encapsulation or a User Datagram Protocol, UDP, encapsulation.

5. The method of any one of claims 1 to 4, further comprising:
receiving a user instruction; and
pre-agreeing on the forwarding port number and the added message based on the user instruction, and setting the IP address of the second forwarding device.

6. A message transmission method, comprising:
receiving a message sent by a first forwarding device;
detecting whether the message is a Layer 3 message, which is a message carrying an added message header and a forwarding port number;
in response to the message being a Layer 3 message, detecting whether the added message header and the forwarding port number are a message header and a port number pre-agreed with the first forwarding device; and
in response to the added message header and the forwarding port number being the message header and the port number pre-agreed with the first forwarding device, extracting a Layer 2 message encapsulated in the message, and sending the Layer 2 message to a second user equipment, wherein the Layer 2 message is a message sent by a first user equipment.

7. The method of claim 6, further comprising:
in response to the message being not a Layer 3 message, sending the message to the second user equipment.

8. A message transmission system, comprising:
a first user equipment, configured to send a Layer 2 message to a first forwarding device;
the first forwarding device, configured to receive the Layer 2 message sent by the first user equipment, determine a forwarding port number, a message encapsulation mode, and an added message header, encapsulate the Layer 2 message based on the message encapsulation mode, the forwarding port number, and the added message header to obtain a Layer 3 message, and send the Layer 3 message to a second forwarding device;
the second forwarding device, configured to receive a message sent by the first forwarding device, detect whether the message is a Layer 3 message, in response to the message being a Layer 3 message, detect whether the message satisfies a correct sending condition that the message carries an added message header and a forwarding port number which are pre-agreed with the first forwarding device, and in response to the message satisfying the correct sending condition, extract a Layer 2 message encapsulated in the message and send the Layer 2 message to a second user equipment, wherein the Layer 2 message is a message sent by the first user equipment; and
the second user equipment, configured to receive a message sent by the second forwarding device.

9. A network device, comprising:
at least one processor; and
a memory communicably connected to the at least one processor, wherein:
the memory stores an instruction executable by the at least one processor which, when executed by the at least one processor, causes the at least one processor to perform the message transmission method of any one of claims 1 to 5 or the message transmission method of claim 6 or 7.

10. A computer-readable storage medium, storing a computer program which, when executed by a processor, causes the processor to perform the message transmission method of any one of claims 1 to 5 or the message transmission method of claim 6 or 7.
